Europäisches Patentamt

European Patent Office

Office européen des brevets

(19)

(11) Veröffentlichungsnummer : **0 400 192 B1**

## (12) EUROPÄISCHE PATENTSCHRIFT

(45) Veröffentlichungstag der Patentschrift :
22.02.95 Patentblatt 95/08

(51) Int. Cl.⁶ : **G06F 9/38**

(21) Anmeldenummer : **89110027.3**

(22) Anmeldetag : **02.06.89**

(54) **Verfahren und Anordnung zur Verringerung der Anzahl von Verlustzyklen bei der Bearbeitung von Befehlen in nach dem Fliessbandprinzip arbeitenden Datenverarbeitungsanlagen.**

(43) Veröffentlichungstag der Anmeldung :
05.12.90 Patentblatt 90/49

(45) Bekanntmachung des Hinweises auf die Patenterteilung :
22.02.95 Patentblatt 95/08

(84) Benannte Vertragsstaaten :
AT BE CH DE ES FR GB IT LI NL SE

(56) Entgegenhaltungen :
EP-A- 0 239 023
EP-A- 0 253 364
US-A- 4 360 868
COMPUTER, Band 18, Nr. 5, 1985, Seiten 38-48, IEEE, New York, US; J. DEROSA et al.:
"Design and Implementation on the VAX 8600 Pipeline"

(56) Entgegenhaltungen :
JOURNAL OF VLSI AND COMPUTER SYSTEMS, Band 1, Nr. 4, 1986, Seiten 335-376,IEEE, Rockville, Maryland, US; K.A. PIER:
"A Retrospective on the Dorado, a High-Performance Personal Computer"
COMPUTER, Band 20, Nr. 1, Januar 1987, Seiten 55-65, IEEE, New York, US; J.M.ANDERSON et al.: "The Architecture of FAIM-1"

(73) Patentinhaber : Siemens Nixdorf Informationssysteme Aktiengesellschaft
Fürstenallee 7
D-33102 Paderborn (DE)

(72) Erfinder : Wiechert, Reiner, Dipl.-Ing.
Spechtweg 1
D-8011 Vaterstetten (DE)

(74) Vertreter : Fuchs, Franz-Josef, Dr.-Ing. et al
Postfach 22 13 17
D-80503 München (DE)

EP 0 400 192 B1

EP 0 400 192 B1

## Beschreibung

Die Erfindung betrifft ein Verfahren und eine Anordnung zur Verringerung der Anzahl von Verlustzyklen bei der Bearbeitung von Befehlen in nach dem Fließbandprinzip arbeitenden Datenverarbeitungsanlagen entsprechend dem Oberbegriff des Patentanspruches 1.

Bei der nach dem Fließbandprinzip erfolgenden Befehlsausführung werden die einzelnen Phasen einer Befehlsbearbeitung für mehrere Befehle gleichzeitig überlappend ausgeführt, so daß nach einer Vorlaufzeit mit jedem Fortschaltetakt des Fließbandes im Prinzip ein Befehl beendet werden kann. Dieser Idealablauf läßt sich jedoch nur erreichen, wenn keine störenden Ereignisse auftreten, die zu Verzögerungen führen. Solche Störungen des Fließbandablaufes können hervorgerufen werden, wenn Sprungbefehle auftreten oder wenn im voraus bereitgestellte Befehle, Adressen oder Operanden von vorangehend bearbeitenden Befehlen nachträglich noch geändert werden, oder wenn Fehler zu spät erkannt werden.

Derartige Störungen oder Konflikte führen zwangsläufig zu Unterbrechungen bei der eigentlichen Befehlsausführung, und dadurch bedingte Wartezyklen verringern als Verlustzyklen die Leistungsfähigkeit der Datenverarbeitungsanlage. Es sind daher eine Reihe von Vorkehrungen zu treffen, um die Auswirkungen von Störungen oder Konflikten möglichst klein zu halten.

In der europäischen Patentanmeldung EP-A1-0253 364 ist bereits dargelegt, wie man durch eine vorgezogene, von der Ausführungsebene der Befehle unabhängige Berechnung der Befehlsadresse für den Folgebefehl und durch die Verwendung der Folgebefehlsadresse für auf unbedingte Sprungbefehle des Typs BAL oder BALR folgende Befehle zur Bereinigung von Registerkonflikten Verlustzyklen vermeiden kann.

Aufgabe der Erfindung ist es, ausgehend von dieser bekannten Lösung den Umfang der durch Sprungbefehle, Registerkonflikte oder andere Störungen ausgelösten leistungsmindernden Verlustzyklen weiter zu verringern. Diese Aufgabe wird bezüglich des neuen Verfahrens im Prinzip durch die kennzeichnenden Merkmale des Patentanspruches 1 gelöst.

Ausgangspunkt der neuen Lösung ist dabei, daß die Verlustzyklen mit sich bringende Wartezeit bis zur Bereitstellung der für die Aufbereitung der Folgebefehle benötigten Entscheidungen und/oder Ergebnisse durch den Ausführungsprozessor durch ein entsprechend ausgebildetes Rechenwerk des Aufbereitungsprozessors, das die notwendigen Entscheidungen und/oder Ergebnisse bereits im Vorlauf zum Ausführungsprozessor herbeiführt, verkürzt wird. Die für die Aufbereitung von Folgebefehlen gegebenenfalls notwendigen Ergebnisse stehen damit früher zur Verfügung und können bei entsprechender Einordnung in den Fließbandablauf in vielfältiger Weise genutzt werden.

Damit der Fließbandablauf durch das Rechenwerk im Aufbereitungsprozessor nicht beeinträchtigt wird, müssen die benötigten vorzeitigen Ergebnisse innerhalb eines Arbeitszyklus bereitstellbar sein, was bei mehr oder minder vielen Befehlen abhängig vom Aufwand für das Rechenwerk möglich ist.

Bei der Behandlung von unbedingten Sprungbefehlen des Typs BAL oder BALR kann das Rechenwerk gemäß einer Weiterbildung entsprechend Patentanspruch 2 die Funktion des gesonderten Befehlszählers bei der Lösung nach der eingangs genannten EP-A1-0253364 übernehmen.

Auch lassen sich gemäß der Weiterbildung entsprechend den Patentansprüchen 3 bis 6 nicht nur die genannten unbedingten Sprungbefehle in die Konfliktbereinigung einbeziehen, sondern alle schreibend auf eines der Register des allgemeinen Registersatzes einwirkenden Befehle, die innerhalb eines Arbeitszyklus vom Rechenwerk ausführbar sind.

Weiterhin können gemäß einer Weiterbildung entsprechend Patentanspruch 7 die vom Rechenwerk bei der Ausführung von Befehlen gebildeten Anzeigen für die Entscheidung über die Behandlung von bedingten Sprungbefehlen als unbedingte Sprungbefehle mit den in der europäischen Patentanmeldung EP-A1-0239023 bereits erläuterten Vorteilen genutzt und die dadurch bekannte Lösung wesentlich erweitert werden, was auch Gegenstand der parallelen Patentanmeldung EP-A1-0 400 194 ist.

Schließlich ermöglicht eine Weiterbildung entsprechend Patentanspruch 8 ein früheres Erkennen und Reagieren auf Bearbeitungsfehler, wodurch der Aufwand für die Erhebung der Auswirkung durch solche Fehler wesentlich verringert wird und die eigentliche Befehlsverarbeitung früher wieder aufgenommen werden kann.

Der Aufwand für die erfindungsgemäße Anordnung entsprechend Patentanspruch 9 ist verglichen mit den Möglichkeiten zur Leistungssteigerung verhältnismäßig gering, zumal das benötigte Rechenwerk die Aufgaben des bisher vorhandenen Adressenrechenwerks der Adressenrechnungsebene übernehmen kann. Auch hängt der Aufwand für das Rechenwerk in starkem Maße von dem Umfang der vorgegebenen Befehle ab, die verarbeitet werden sollen und die gegebenenfalls die gleichzeitige Durchführung mehrerer Rechenvorgänge erfordern, um die Ergebnisse innerhalb eines Arbeitszyklusses zur Verfügung stellen zu können.

Weiterbildungen der Anordnung ergeben sich aus den Patentansprüchen 9 bis 12.

Einzelheiten der Erfindung seien nachfolgend anhand eines in der Zeichnung dargestellten Ausführungsbeispieles erläutert. Im einzelnen zeigen

2

EP 0 400 192 B1

FIG 1    Ablaufdiagramme zur Erläuterung der Einsparungsmöglichkeiten von Verlustzyklen,
FIG 2    ein schematisches Blockschaltbild gemäß der Erfindung,
FIG 3    ein Blockschaltbild des Überwachungsteiles der Einrichtungen für die Konfliktbehandlung von FIG 2 und
FIG 4    ein Blockschaltbild des Bewertungsteiles der Einrichtungen für die Konfliktbehandlung von FIG 2.

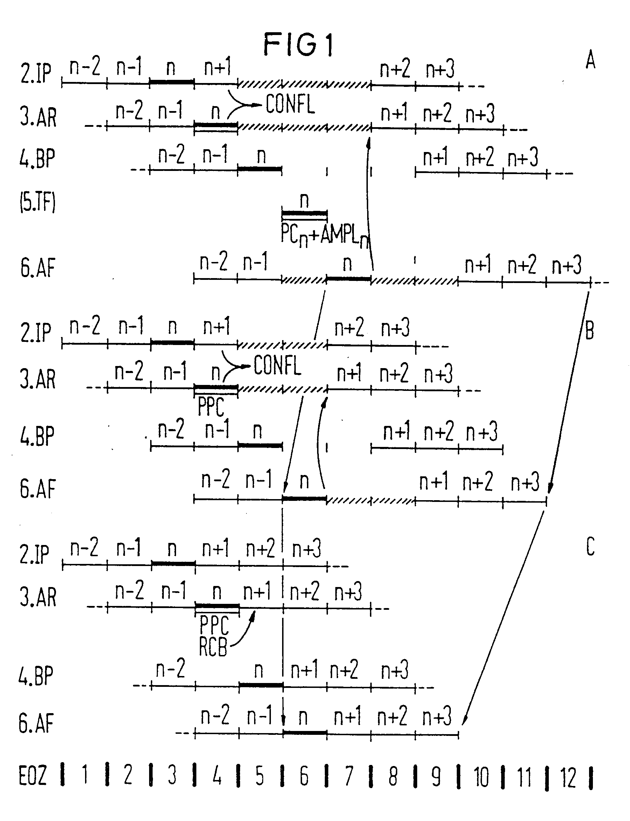

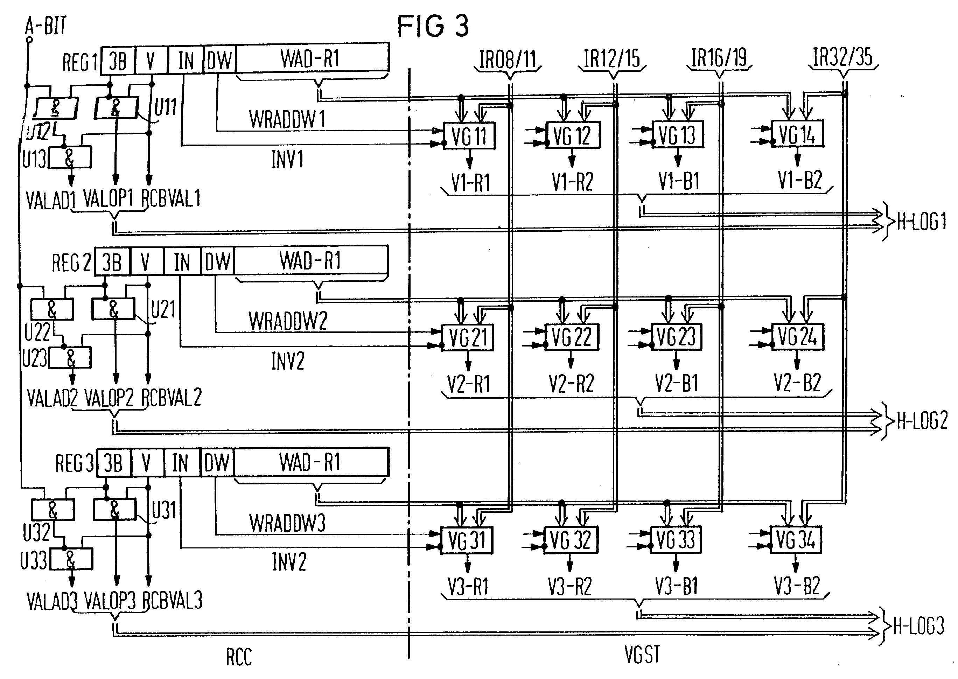

FIG 1 zeigt in Anlehnung an FIG 3 der einen genannten europäischen Patentanmeldung EP-A1-0253364 Ablaufdiagramme für Ablauffolgen der Befehle n-2 bis n+3 während der Arbeitszyklen EOZ1 bis EOZ12 des Fließbandes in den einzelnen Verarbeitungsstufen 1 bis 6, die sich auf das nicht gezeigte Befehlslesen, auf die Befehlsinterpretation (IP), auf das Adressenrechnen (AR), auf die Parameterbereitstellung (PB), auf die möglicherweise notwendige Transferphase (TF) und auf die Befehlsausführung (AF) beziehen.

Bei den Ablaufdiagrammen A und B ist der Befehl n ein unbedingter Sprungbefehl vom Typ BAL oder BALR mit nicht erfülltem Sprung, was bereits während der Interpretationsphase IP während des Arbeitszyklusses EOZ3 erkennbar ist, so daß die Befehlsfolge linear mit dem nächsten Befehl n+1 fortgesetzt werden kann, als hätte kein Sprungbefehl n vorgelegen.

Der Maschinenbefehlzähler zeigt dabei immer auf den in der Ausführungsebene AF zur Ausführung anstehenden Befehl und wird bei den gezeigten Befehlen mit jeweils nur einem Ausführungszyklus - 1EO-Befehle - jeweils erst am Ende des jeweiligen Ausführungszyklusses auf die Adresse des Folgebefehls umgeschaltet.

Während des Arbeitszyklus EOZ4, also z.B. während der Adressenrechnungsphase AR für den Sprungbefehl n, zeigt der Befehlszähler erst die Adresse des sich in der Ausführung befindlichen Befehls n-2 an. In diesem Zyklus kann also die Adresse für den linearen Folgebefehl n+1, die bei der Ausführung des Befehls n in einem vorgegebenen Register abzuspeichern ist, noch nicht berechnet werden. Die benötigte Adresse $PC_n$ für den Befehl n steht erst im Arbeitszyklus EOZ6 zur Verfügung und kann erst dann durch die Addition der Befehlslänge $AMPL_n$ des Sprungbefehles n hochgerechnet werden. Das erfordert in der Regel einen zusätzlichen Zyklus, der in der Transferebene TF angedeutet ist, bevor der Sprungbefehl n tatsächlich ausgeführt werden kann, so daß vor Ausführung eines jeden Sprungbefehles vom Typ BAL oder BALR mit nicht erfülltem Sprung ein Verlust von einem Arbeitszyklus auftritt.

Das Ablaufdiagramm B zeigt den Befehlsfolgeablauf für den Fall, daß gemäß der bekannten Lösung ein gesonderter Befehlzähler PPC vorgesehen ist, der im Vorlauf zum eigentlichen Maschinenbefehlszähler die Adresse des für die Adressenrechnungsphase AR jeweils anstehenden Befehles anzeigt.

Zu Beginn der Adressenrechnung eines Befehles, z.B. des Sprungbefehles n, ist daher immer die zugehörige Befehlsadresse verfügbar, so daß zeitlich parallel dazu die Folgebefehlsadresse n+1 ermittelt werden kann, was in Zeile 3.AR durch die zusätzliche Angabe PPC angedeutet ist. Der auf der Ausführungsebene AF mit jedem Sprungbefehl entsprechend dem Ablaufdiagramm A verbundene Verlust von einem Arbeitszyklus (EOZ6) entfällt daher durch die Vorausberechnung des Befehlszählerstandes beim Ablaufdiagramm B von FIG 1.

Bei den Ablaufdiagrammen A bis C von FIG 1 ist außerdem unterstellt, daß der lineare Folgebefehl n+1 die vom Sprungbefehl n in ein vorgegebenes Register zu speichernde Folgebefehlsadresse zur Adressenberechnung benötigt.

Bei der Interpretation des Folgebefehls n+1 wird daher in an sich bekannter Weise festgestellt, daß der für die nachfolgende Adressenrechnung benötigte Registerinhalt durch den noch nicht ausgeführten Vorläuferbefehl, nämlich den Sprungbefehl n, noch verändert werden kann und die anschließende Adressenrechnungsphase AR im Arbeitszyklus EOZ5 noch nicht durchgeführt werden kann. Durch den ermittelten Konflikt CONFL wird die Weiterbehandlung des Befehles n+1 durch den Aufbereitungsprozessor vorübergehend gestoppt, bis nach Ausführung des Sprungbefehles n im Arbeitszyklus EOZ7 im Ablaufdiagramm A die Adressenrechnung für den Befehl n+1 im Arbeitszyklus EOZ8 durchgeführt werden kann, der dann im Arbeitszyklus EOZ10 zur Ausführung gelangt.

Beim Ablaufdiagramm B ist dieselbe Situation zugrundegelegt, nur kommt auf Grund der Vorausberechnung der Folgebefehlsadresse der Befehl n bereits um einen Arbeitszyklus früher zur Aufführung, so daß auch der Folgebefehl n+1 um einen Arbeitszyklus früher, also im Arbeitszyklus EOZ9, ausgeführt werden kann.

Wird dagegen entsprechend dem dem Ablaufdiagramm C von FIG 1 zugrundeliegenden Verfahren die vorausberechnete Folgebefehlsadresse für den Befehl n+1 in einem Konfliktüberwachungsspeicher RCB zwischengespeichert und im Konfliktfall für die Adressenrechnung des den Konflikt auslösenden Folgebefehls, z.B. n+1, herangezogen, dann kann die Adressenrechnung für den Befehl n+1 sofort nach der für den Befehl n ausgeführt werden, so daß im Vergleich zum Ablaufdiagramm B der Befehl n+1 zwei Arbeitszyklen früher, d.h. bereits im Arbeitszyklus EOZ7 statt im Arbeitszyklus EOZ9, zur Ausführung gelangt.

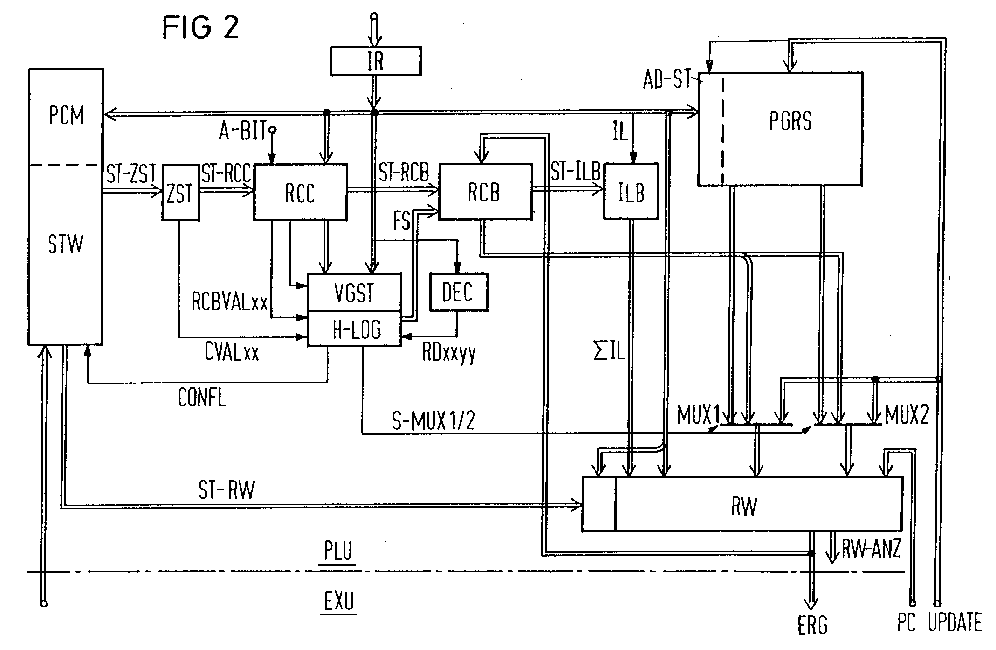

FIG 2 zeigt ein schematisches Blockschaltbild einer Anordnung mit einem gesonderten Rechenwerk RW im Aufbereitungsprozessor PLU und einer Registerkonfliktsteuerung mit einem Registerkonfliktspeicher RCB zur Zwischenspeicherung der vom gesonderten Rechenwerk RW jeweils gelieferten Ergebnisse, die im Kon-

3

fliktfall für die Konfliktbereinigung herangezogen werden. Gezeigt sind im wesentlichen nur die für das Verständnis erforderlichen Baugruppen des Befehlsaufbereitungsprozessor PLU mit einigen Schnittstellenleitungen zum Befehlsausführungsprozessor EXU.

Aus einem nicht gezeigten Befehlspuffer gelangen die Befehle nacheinander in das Befehlsregister IR zur Interpretation durch die Steuerung PCM/ST des Befehlsaufbereitungsprozessors PLU, die in an sich bekannter Weise die notwendigen Steuersignale bereitstellt.

Abhängig vom jeweiligen Befehl im Befehlsregister IR berechnet das Rechenwerk RW in Verbindung mit gegebenenfalls im Registersatz PGRS gespeicherten Daten die notwendigen Adressen und stellt diese bereit, damit sie nach Bedarf in die üblichen, nicht gezeigten Parameterpufferregister übernommen werden können.

Weiterhin ist mit dem Ausgang des Befehlsregisters IR und der Steuerung PCM/ST eine Konfliktbehandlungseinrichtung zur Erkennung und gegebenenfalls Bereinigung von Registerkonflikten gekoppelt. Diese Konfliktbehandlungseinrichtung besteht aus einem Konfliktüberwachungsspeicher RCC mit angeschlossener Vergleichersteuerung VGST und Bewertungslogik H-LOG sowie einem Konfliktspeicher RCB. Im Konfliktüberwachungsspeicher RCC werden in an sich bekannter Weise die aus den interpretierten Befehlen entnommenen Schreibadressen für die Register im Registersatz PGRS gespeichert und zwar in Zuordnung zu den im Fließband ab der Adressenrechnungsphase AR bis zur Rückmeldung der Ausführung durch den Befehlsausführungsprozessor EXU bearbeiteten Befehlen. Diese Zuordnung wird durch die gemeinsame Zuordnungssteuerung ZST in an sich bekannter Weise gesteuert. In der Interpretationsphase eines jeden neuen Befehls werden alle Einträge im Konfliktüberwachungsspeicher RCC mit den Leseregisteradressen des jeweils interpretierten Befehls verglichen und durch die Vergleichersteuerung VGST ermittelt, ob eine der im interpretierten Befehl enthaltenen Leseadressen mit einer gespeicherten Schreibregisteradresse eines vorangehend aufbereiteten Befehls übereinstimmt. Ist dies der Fall, dann liegt ein Registerkonflikt vor, und der neue Befehl kann gegebenenfalls nicht weiterbehandelt werden, d.h. in die Adressenrechnungsphase AR übergeleitet werden, bis der in den Konflikt verwickelte Vorläuferbefehl vom Ausführungsprozessor EXU ausgeführt ist.

Die endgültige Entscheidung darüber trifft die Bewertungslogik H-LOG abhängig von den gültigen Einträgen im Konfliktspeicher RCB, der ähnlich wie der Konfliktüberwachungsspeicher RCC aus Registern aufgebaut ist und in dem die Einträge ebenfalls in Zuordnung zur Weiterleitung der zugehörigen Befehle von Bearbeitungsstufe zu Bearbeitungsstufe gespeichert werden.

In Auswirkung der Erfindung erhält der Konfliktspeicher RCB alle seine Einträge, die Inhalte der Register des allgemeinen Registersatzes PGRS betreffen, aber in diesen noch nicht verfügbar sind, vom Rechenwerk RW zur Verfügung gestellt, was später noch näher erläutert wird.

Der Registerkonfliktspeicher RCB verfügt wie die Register des allgemeinen Registersatzes PGRS über zwei getrennte Ausgänge, die zu zwei getrennten Auswahlschaltern MUX1 und MUX2 zur Speisung des Rechenwerkes RW führen und die wahlweise von jedem Register mit Daten beaufschlagt werden können, wobei zwei Register gleichzeitig ansteuerbar und deren Inhalte gleichzeitig über die Ausgänge weiterleitbar sind. Kommt daher die Bewertungslogik H-LOG zum Ergebnis, daß ein erkannter Konflikt anhand der Einträge im Konfliktspeicher RCB bereinigt werden kann, dann werden die beiden Auswahlschalter MUX1 und/oder MUX2 durch die zugehörigen Steuersignale S-MUX1 und S-MUX2 der Bewertungslogik H-LOG so eingestellt, daß im Registersatz PGRS nicht vorhandene, aber benötigte Daten ersatzweise aus dem Konfliktspeicher RCB zur Verfügung gestellt werden. Das Auswahlsignal FS für die Freigabe des bzw. der Einträge im Konfliktspeicher RCB wird dabei von den entsprechenden Treffersignalen der Bewertungslogik abgeleitet.

Weiterhin ist neben den beiden Registerspeichern RCC und RCB ein weiterer gleichartig aufgebauter Speicher ILB vorgesehen, der ebenfalls in Zuordnung zu den vom Fließband bearbeiteten Befehlen die jeweils zugehörige Befehlslänge IL speichert und am Ausgang jeweils die Summe $\Sigma$IL aller eingetragenen Befehlslängen IL anzeigt, so daß das Rechenwerk RW zusammen mit dem Befehlszählerstand des Maschinenbefehlzählers PC des Ausführungsprozessors EXU jeweils die Folgebefehlsadresse berechnen kann. Das Rechenwerk RW übernimmt somit in Verbindung mit dem Speicher ILB auch die Funktion des gesonderten Befehlzählers im Aufbereitungsprozessor bei der Lösung nach der einen genannten europäischen Patentanmeldung.

Im übrigen sind die Steuersignalleitungen für die Einrichtung ZST, RCC, RCB, ILB und RW der Einfachheit halber in Bündeln ST-ZST, ST-RCC, ST-RCB, ST-ILB und ST-RW zusammengefaßt dargestellt.

Das Rechenwerk RW führt aber nicht nur die üblichen Adressenberechnungen der Adressenrechnungsebene AR und die Berechnung der Folgebefehlsadressen durch, sondern das Rechenwerk ist auch so gestaltet, daß im Vorgriff zur Befehlsausführung durch den Ausführungsprozessor EXU vorgegebene Befehle, die anhand des Operationscodes erkannt werden, selbstständig ausgeführt und die Ergebnisse in Zuordnung zu ihren Befehlen im Konfliktspeicher RCB abgespeichert werden.

Der Umfang dieser vom Rechenwerk RW im Vorgriff ausführbaren Befehle hängt im wesentlichen davon ab, ob sie in einem Arbeitszyklus EOZ ausgeführt werden können, und ob dies möglich ist, hängt wiederum vom Aufwand für das Rechenwerk selbst ab. So ist z.B. entscheidend, ob bei aus zwei Registern gleichzeitig lesenden Befehlen gegebenenfalls zwei Rechnungen gleichzeitig ausgeführt werden können oder nacheinander ausgeführt werden müssen. In jedem Falle bringt jeder erfaßbare Befehl eine zusätzliche Verringerung von möglichen Verlustzyklen mit sich.

FIG 3 zeigt den Aufbau des Konfliktüberwachungsspeicher RCC und der Vergleichssteuerung VGST für die Konfliktüberwachung. Der Konfliktüberwachungsspeicher RCC besteht entsprechend den verbleibenden Verarbeitungsstufen aus drei Registern REG1 bis REG3 mit der jeweiligen Registerschreibadresse WAD-R1, die den Vergleichswert für die in den einzelnen Feldern IRO8/11, 12/15, 16/19 und 32/35 eines Befehls möglicherweise enthaltenen Registerleseadressen bildet und die jeweils vier Vergleicher, z.B. VG11 bis VG14, speist. Bezüglich des Aufbaus der einzelnen Befehlstypen sei beispielsweise auf die Siemens Druckschrift D15/5104-04: "Zentraleinheiten Siemens-System 7.500/7.700 - Beschreibung und Befehlsliste", insbesondere Seiten 4-1 bis 4-3 und Seiten 10-1 bis 10-3 verwiesen. Weiterhin enthalten die Register zwei Steuerbits für die Steuerung der Vergleicher VG.., nämlich das Steuerbit IN, das kennzeichnet, ob die zugehörige Registerschreibadresse WAD-R1 ungültig ist, und das die angeschlossenen Vergleicher VG.. sperrt, sowie das Steuerbit DW, das vom 4-Bit-Vergleich auf einen 3-Bit-Vergleich umsteuert, wenn wegen eines Doppelwortbefehls auch das Folgeregister überwacht werden muß. Das weitere Steuerbit V zeigt an, ob im Konfliktspeicher RCB ein gültiger Eintrag vorhanden ist, und das Steuerbit 3B kennzeichnet, daß nur drei Byte von diesem Eintrag gültig sind, so daß in Verbindung mit dem Modussignal A-BIT für den Betrieb mit 24-Bit- oder 31-Bit-Adressierung eine nicht zulässige Verarbeitung von 4-Byte umfassenden Operanden oder Adressen unterdrückt werden kann. Von diesen beiden Steuerbits werden jeweils mit den UND-Gliedern U11 bis U13 bzw. U21 bis U23 bzw. U31 bis U33 Gültigkeitssignale RCBVAL., VALOP. und VALAD. abgeleitet und zusammen mit den Ausgangssignalen V1-.. bis V3-.. der Vergleicher VG1.. bis VG3.. den entsprechenden Stufen der Bewertungslogik H-LOG zugeleitet.

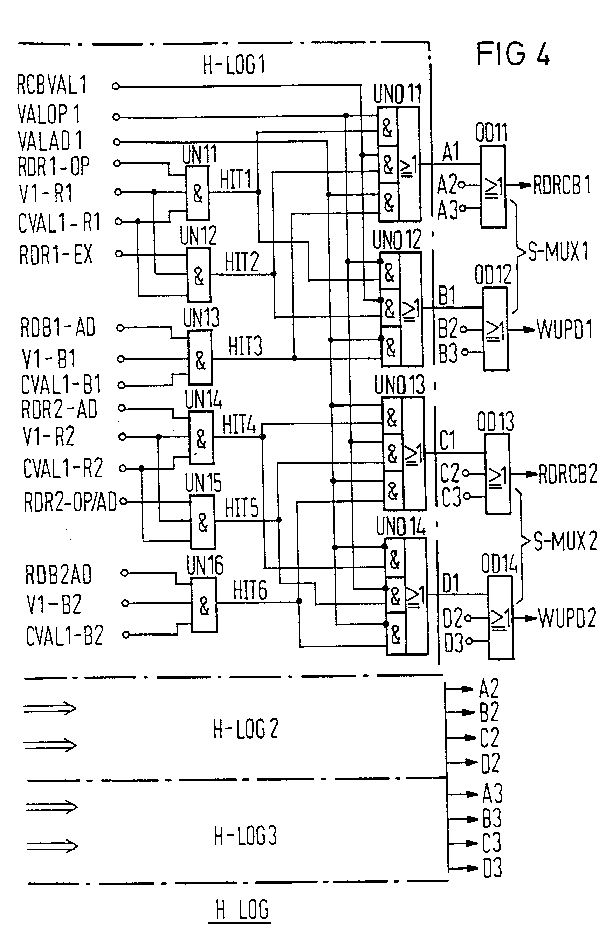

FIG 4 zeigt schließlich die Bewertungslogik H-LOG, die darüber entscheidet, ob eine Konfliktbereinigung möglich ist. Sie besteht wie der Konfliktüberwachungsspeicher RCC und die Vergleichersteuerung VGST aus drei gleichartig aufgebauten Stufen H-LOG1 bis H-LOG3, von denen die beiden letzten nur schematisch angedeutet sind. Jede Stufe umfaßt dabei sechs UND-Glieder UN11 bis UN16, durch die die vier befehlsabhängigen Vergleichersignale V1-R1, V1-B1, V1-R2 und V1-B2 einerseits in Verbindung mit aus dem Operationscode abgeleiteten befehlsspezifischen Signalen RDxx-yy verknüpft werden, um zu verhindern, daß ein im Befehl nicht relevantes Feld irrtümlich einen Treffer vortäuschen kann. Außerdem werden diese Signale mit von der Zuordnungssteuerung ZST gelieferten Gültigkeitssignalen CVAL1-xx verknüpft, die anzeigen, daß einerseits die für den Vergleich herangezogene Registeradresse aus dem Konfliktüberwachungsspeicher RCC noch nicht in Folge eines vom Befehlsausführungsprozessor bereitgestellten Eintrags überholt ist und daß andererseits nicht in ein anderes Register des Konfliktüberwachungsspeichers RCC dieselbe Registeradresse später noch einmal eingetragen worden ist.

Im Prinzip genügt je Stufe ein Signal CVAL, das aus der Überwachung der Einträge im Konfliktüberwachungsspeicher RCC bei jedem neuen Eintrag durch Vergleich mit den übrigen Einträgen ableitbar ist. Das erfordert aber zusätzliche Vergleicher, die man vermeiden kann, wenn man die feldbezogenen Ausgangssignale der einander entsprechenden Vergleicher VG.. der Vergleichssteuerung VGST verwendet, die dann durch einfache Verknüpfung mit aus der jeweiligen Stellung der Zuordnungssteuerung ZST abgeleiteten Signalen verknüpft werden.

Sind die Verknüpfungsbedingungen für eines der UND-Glieder UN11 bis UN16 erfüllt, dann liegt ein Treffer HIT. vor, wobei die Treffer der folgenden befehlsabhängigen Klassifizierung entsprechen:

HIT1 - Über das R1-Befehlsfeld wird ein zu lesender Operand adressiert - Beispiel: Befehle BCTR, OR
HIT2 - Es wird nur ein Byte gelesen - Beispiel: Befehl EX
HIT3 - Über das B1-Befehlsfeld wird zu lesenden Adressen adressiert Beispiel: SI- und SS-Befehle
HIT4 - Über das R2-bzw. X2-Befehlsfeld wird eine zu lesende Adresse adressiert -
Beispiel: Befehle BALR, BCTR und RX-Befehle
HIT5 - Über das R2-Befehlsfeld wird ein zu lesender Operand bzw. eine zu lesende Adresse adressiert -
Beispiel: Befehle NR, LR, ALR bzw. BSM und BASSM
HIT6 - Über das B2-Befehlsfeld wird eine zu lesende Adresse adressiert -
Beispiel: SS-Befehle.

Die dabei angegebenen einzelnen Befehle sind beispielsweise der genannten Siemens Druckschrift zu entnehmen.

Auf Grund dieser Klassifizierung lassen sich zwei Gruppen bilden, wobei entweder in einer der beiden Gruppen ein Treffer oder aber in beiden Gruppen jeweils ein Treffer angezeigt werden kann, weil ein Befehl aus zwei Registern Inhalte lesen muß. In der aus den logischen Verknüpfungsanordnungen UNO11 bis UNO14 - jeweils drei UND-Glieder mit nachgeschalteten ODER-Glied - bestehenden Folgelogik werden die Treffersi-

EP 0 400 192 B1

gnale dann mit den vom Konfliktüberwachungsspeicher RCC gelieferten zugehörigen Gültigkeitssignalen RCBVAL1, VALOP1 und VALAD1 verknüpft. Wäre keine Umschaltung des Adressierungsmodus zu berücksichtigen, würde allein das Signal RCBVAL1 genügen. Im vorliegenden Falle steuern die zusätzlichen Signale VALOP1 und VALAD1 wegen der Umschaltbarkeit des Adressierungsmodus mit dem Steuerbit A-BIT die Verarbeitung von vier Byte umfassenden Adressen und Operanden, wobei das Signal VALOP1 anzeigt, daß der Eintrag im Konfliktspeicher RCB in voller Breite über vier Byte gültig ist und somit ein Konflikt beim Operandenlesen bereinigt werden kann, während das Signal VALAD1 anzeigt, daß der Eintrag im Konfliktspeicher RCB eine gültige Adresse darstellt, die abhängig vom Adressierungsmodus über drei oder vier Byte gültig sein kann, und daß ein Konflikt bei der Adressenrechnung bereinigt werden kann.

Die logischen Verknüpfungsanordnungen UNO11 bis UNO14 werden entsprechend den beiden Gruppen für die Treffersignale immer paarweise mit alternativen Gültigkeitssignalen angesteuert, so daß sich für jede der drei Bewertungsstufen H-LOG1 bis H-LOG3 zwei Ausgangssignalpaare, z.B. A1/C1 und B1/D1, ergeben. Die einander entsprechenden Ausgangssignale werden dann durch ODER-Glieder OD11 bis OD14 verknüpft, so daß zwei verschiedene Ansteuerungssignale RDRCB1 und RDRCB2 für den Konfliktspeicher RCB bei einer möglichen Konfliktbereinigung sowie zwei verschiedene Steuersignale WUPD1 und WUPD2, die beide einen Konflikt CONFL signalisieren, gebildet werden können.

Die beiden Ausgangssignale RDRCB1 und WUPD1 bzw. RDRCB2 und WUPD2 bilden jeweils in Kombination die Einstellsignale S-MUX1 bzw. S-MUX2 für die Einstellung der Auswahlschalter MUX1 und MUX2 in FIG 2, wobei folgendes Einstellschema gilt:

| RDRCBx | WUPDx | Quelle |
|---|---|---|
| 0 | 0 | PRGS |
| 1 | 0 | RCB |
| x | 1 | EXU (UPDATE) |

Weitere nicht weiter durch die Zeichnung erfaßte Steuerungsmöglichkeiten für die durch das Rechenwerk RW erstellten Ergebnisse ERG und Ergebnisanzeigen RW-ANZ ergeben sich außerdem bezüglich der Behandlung von bedingten Sprungbefehlen, die auf Grund der vom unmittelbaren Vorläuferbefehl abgeleiteten Anzeige und deren Berücksichtigung noch in der Interpretationsphase als unbedingte Sprungbefehle behandelt werden können. Die parallele europäische Patentanmeldung EP-A1-0 400 194 beschreibt diese Möglichkeit ausführlich, so daß dies als Hinweis genügen mag, um die vielseitige Verwendbarkeit des Rechenwerkes zu unterstreichen.

Weiterhin ist es ohne Schwierigkeiten möglich, die im Konfliktspeicher RCB gespeicherten Einträge nach Verlassen des Speichers mit den dann vorliegenden Ergebnissen des Ausführungsprozessors EXU zu vergleichen, so daß Fehler sehr frühzeitig erkannt werden. Das erhöht einerseits die Bearbeitungssicherheit und verringert andererseits die Verlustzeiten, die durch die Behebung von erst nachträglich entdeckten Fehlern verursacht werden.

**Patentansprüche**

1. Verfahren zur Verringerung der Anzahl von Verlustzyklen bei der Bearbeitung von Befehlen in nach dem Fließbandprinzip arbeitenden Datenverarbeitungsanlagen mit einem Befehlsaufbereitungsprozessor (PLU) für Befehlslesen (LB), Befehlsinterpretation (IP), Adressenrechnen (AR) und Parameterbereitstellung (BP), mit einem Befehlsausführungsprozessor (EXU) für die eigentliche Befehlsausführung (AF) und mit einem gemeinsamen Puffer- und Arbeitsspeicher, **dadurch gekennzeichnet,**
    - daß von, in der Interpretationsphase (IP) ermittelten vorgegebenen Befehlen abhängige Entscheidungen und/oder Ergebnisse für die Aufbereitung von Folgebefehlen durch ein in der Adressenrechnungsebene (AR) des Aufbereitungsprozessors (PLU) vorgesehenes und entsprechend ausgebildetes Rechenwerk (RW) bereits im Vorlauf zur Ausführung dieser Befehle durch den Ausführungsprozessor (EXU) herbeigeführt werden,
    - daß die ermittelten vorzeitigen Ergebnisse in Zuordnung zum jeweiligen, die einzelnen Bearbeitungsstufen bis zur Ausführung durchlaufenden Befehl gespeichert werden und
    - daß die Aufbereitung der jeweils nachfolgenden Befehle durch den Aufbereitungsprozessor (PLU) anhand der vorzeitig vorliegenden und zwischengespeicherten Ergebnisse gesteuert wird.

6

2. Verfahren nach Anspruch 1, **dadurch gekennzeichnet,**
   - daß für jeden interpretierten Befehl die zugehörige Befehlslänge (IL) unter Aufrechterhaltung der Zuordnung bei der Weiterleitung dieses Befehls von Verarbeitungsstufe zu Verarbeitungsstufe in einem gesonderten Speicher (ILB) gespeichert wird,
   - daß bei der Aufbereitung von unbedingten Sprungbefehlen, die eine Abspeicherung der Adresse des linearen Folgebefehls in einem vorgesehenen Register des allgemeinen Registersatzes (PG RS) bewirken, die Folgebefehlsadresse vom Rechenwerk (RW) des Aufbereitungsprozessors (PLU) anhand des vom Ausführungsprozessor (EXU) bereitgestellten jeweiligen Befehlzählerstandes und der Summe ($\Sigma$IL) der zwischengespeicherten Befehlslängen (IL) der in der Aufbereitung befindlichen Vorläuferbefehle zum aufzubereitenden unbedingten Sprungbefehl ermittelt und gespeichert wird, bis sie zeitgerecht vor Ausführung des unbedingten Sprungbefehls durch den Ausführungsprozessor (EXU) im Parameterpuffer bereitgestellt wird.

3. Verfahren nach Anspruch 1 oder 2, **dadurch gekennzeichnet,**
   - daß bei jeder Befehlsinterpretation (IP) eines Befehls geprüft wird, ob ein den Inhalt eines der Register des allgemeinen Registersatzes (PGRS) bei seiner Ausführung in der Ausführungsebene (AF) verändernder und innerhalb eines Arbeitszyklusses (EOZ) vollständig ausführbarer Befehl vorliegt,
   - daß abhängig vom positiven Ergebnis dieser Prüfung der jeweils zugehörige Befehl durch das Rechenwerk (RW) im Vorlauf zur Ausführungsebene (AF) ausgeführt wird und das jeweils ermittelte Ergebnis in einem mehrstufigen Registerkonfliktspeicher (RCB) eingetragen wird, wobei die Zuordnung jedes Eintrags mit der Weiterleitung des zugehörigen Befehls von Bearbeitungsstufe zu Bearbeitungsstufe des Aufbereitungsprozessors (PLU) geändert wird, bis der zugehörige Befehl im Ausführungsprozessor (EXU) zur Ausführung gelangt und
   - daß bei einem durch einen der unmittelbar nachfolgenden Folgebefehle ausgelösten Registerkonflikt und gültigem Eintrag im Registerkonfliktspeicher (RCB) die auf die Interpretationsphase (IP) folgende weitere Befehlsaufbereitung anhand des vorliegenden Eintrags unmittelbar fortgeführt wird, während bei nicht gültigem Eintrag üblicherweise bis zur Bereitstellung des benötigten gültigen Registerinhaltes durch den Ausführungsprozessor (EXU) gewartet wird.

4. Verfahren nach Anspruch 3, **dadurch gekennzeichnet,** daß zur Konfliktüberwachung die die Registerleseradressen beinhaltenden Felder eines Befehls jeweils befehlsbezogen an Hand der in einem Konfliktüberwachungsspeicher (RCC) eingetragenen Registerschreibadressen der Vorläuferbefehle überwacht werden und daß die Überwachungsergebnisse befehlsbezogen bewertet einen Konflikt anzeigen, wenn der Inhalt des im Konfliktüberwachungsspeicher (RCC) eingetragenen Registers inzwischen nicht vom Ausführungsprozessor (EXU) geändert und derselbe Registereintrag nicht nochmals als zeitlich jüngerer Eintrag vorliegt.

5. Verfahren nach Anspruch 4, **dadurch gekennzeichnet,** daß zur Konfliktbereinigung bei mehreren entsprechend der Anzahl der von einem Befehl gleichzeitig gelesenen Register gleichzeitig ausgelösten Konfliktanzeigen diese in getrennte Steuersignale für die Umschaltung der Eingänge des Rechenwerkes (RW) im Aufbereitungsprozessor (PLU) vom jeweils betroffenen Register des allgemeinen Registersatzes (PGRS) auf den entsprechenden Eintrag im Konfliktspeicher (RCB) umgesetzt werden.

6. Verfahren nach Anspruch 5, **dadurch gekennzeichnet,** daß bei Datenverarbeitungsanlagen mit zwei verschiedenen Adressierungsmodi (24- und 31-Bit-Adressen) und entsprechender Verarbeitung von 3-Byte-Adressen oder 4-Byte-Adressen bzw. -Operanden neben einem Gültigkeitsbit (V) für jeden Eintrag im Konfliktüberwachungsspeicher (RCC) ein zusätzliches Steuerbit (3B) verwendet wird, das die Gültigkeit von nur 3 Byte des zugehörigen Eintrags im Konfliktspeicher (RCB) anzeigt, und daß abhängig von diesem Steuerbit (3B) und abhängig vom jeweiligen Adressierungsmodus (A-BIT) die Freigabe der Konfliktbereinigung für 4 Byte betreffende Operanden bzw. Adressen gesteuert wird.

7. Verfahren nach einem der Ansprüche 1 bis 6, **dadurch gekennzeichnet,**
   - daß bei jedem vom Rechenwerk (RW) des Aufbereitungsprozessors (PLU) im Vorlauf zur Ausführung durch den Ausführungsprozessor (EXU) ausgeführten Befehl die zugehörige Anzeige (RW-ANZ) ermittelt und zusammen mit einem Anzeigenänderungshinweis gespeichert wird und
   - daß bei einem auf einen vom Rechenwerk (RW) des Aufbereitungsprozessors (PLU) bereits ausgeführten Befehl unmittelbar folgenden bedingten Sprungbefehl auf Grund des gespeicherten Anzeigenänderungshinweises der bedingte Sprungbefehl wie ein unbedingter Sprungbefehl behandelt und bereits in der Interpretationsphase (IP) dieses Befehles anhand der vorzeitig ermittelten Anzeige des Vorläuferbefehls geprüft wird, ob die Sprungbedingung erfüllt ist oder nicht.

8. Verfahren nach einem der Ansprüche 1 bis 7, **dadurch gekennzeichnet,** daß die vom Rechenwerk (RW) des Aufbereitungsprozessors (PLU) jeweils ermittelten Ergebnisse nach Ausführung des jeweils zugehörigen Befehls durch den Ausführungsprozessor (EXU) mit den von diesem ermittelten Ergebnissen verglichen werden und daß bei einer ermittelten Ungleichheit in eine entsprechende Unterbrechungsroutine übergeleitet wird.

9. Anordnung zur Verringerung der Anzahl von Verlustzyklen bei Bearbeitung von Befehlen in nach dem Fließbandprinzip arbeitenden Datenverarbeitungsanlagen mit einem Befehlsaufbereitungsprozessor (PLU) für Befehlslesen (LB), Befehlsinterpretation (IP), Adressenrechnen (AR) und Parameterbereitstellung (BP), mit einem Befehlsausführungsprozessor (EXU) für die eigentliche Befehlsausführung (AF) und mit einem gemeinsamen Puffer- und Arbeitsspeicher, **gekennzeichnet**
   - durch ein im Vorlauf zur Befehlsausführung durch den Ausführungsprozessor (EXU) die Bereitstellung der von vorgegebenen Befehlen abhängigen Entscheidungen und/oder Ergebnisse ermöglichendes Rechenwerk (RW) in der Adressenrechenstufe (AR) des Aufbereitungsprozessors (PLU),
   - durch Einrichtungen (RCB, ZST) zur Speicherung der vom Rechenwerk (RW) gelieferten Ergebnisse in Zuordnung zum jeweiligen, die einzelnen Verarbeitungsstufen bis zur Ausführung durchlaufenden Befehl und
   - durch Einrichtungen zur Steuerung der Aufbereitung nachfolgender Befehle durch den Aufbereitungsprozessor (PLU) anhand der vorzeitig vorliegenden gespeicherten Ergebnisse.

10. Anordnung nach Anspruch 9, **gekennzeichnet**
   - durch einen Speicher (ILB) zur Speicherung der Befehlslänge (IL) eines jeden interpretierten Befehls unter Aufrechterhaltung der Zuordnung bei der Weiterleitung dieses Befehls von Verarbeitungsstufe zu Verarbeitungsstufe,
   - durch auf interpretierte unbedingte Sprungbefehle ansprechende Einrichtungen zur Speisung des Rechenwerks (RW) des Aufbereitungsprozessors (PLU) mit der Summe ($\Sigma$IL) der gespeicherten Befehlslänge (IL) und dem jeweiligen, vom Ausführungsprozessor (EXU) bereitgestellten augenblicklichen Befehlzählerstand (PG) und
   - durch Einrichtungen zur zeitgerechten Bereitstellung der vom Rechenwerk (RW) ermittelten Befehlsadresse für den linearen Folgebefehl im Parameterpuffer für den Ausführungsprozessor (EXU).

11. Anordnung nach Anspruch 9 oder 10, **gekennzeichnet,**
   - durch eine Konfliktüberwachungseinrichtung (RCC,VGST,H-LOG),
   - durch einen Registerkonfliktspeicher (RCB) zur Zwischenspeicherung der vom Rechenwerk (RW) des Aufbereitungsprozessors (PLU) gelieferten Ergebnisse in Zuordnung zu den in der Aufbereitung befindlichen Befehlen und
   - durch Einrichtungen zur Auswahl und Bereitstellung des bzw. der im Konfliktfall aus dem Registerkonfliktspeicher (RCB) für das Rechenwerk (RW) benötigten Einträge.

12. Anordnung nach einem der Ansprüche 9 bis 11, **gekennzeichnet** durch Einrichtungen (ZST) zur gemeinsamen Steuerung der Zuordnung der sich jeweils auf denselben Befehl beziehenden, aber in verschiedenen Speichern (z.B. ILB,RCB,RCC) gespeicherten Daten und Ergebnisse bei der Weiterleitung des Befehls von Verarbeitungsstufe zu Verarbeitungsstufe.


## Claims

1. Method for reducing the number of lost cycles when processing instructions in data processing systems operating on the pipeline principle, having a pipeline unit (PLU) for instruction prefetch (LB), instruction interpretation (IP), address computation (AR) and parameter provision (BP), having an instruction execution unit (EXU) for the actual instruction execution (AF) and having a joint buffer and main memory, characterized
   - in that decisions and/or results dependent on preset instructions determined in the interpretation phase (IP) are fetched for the preprocessing of follow-up commands by an arithmetic unit (RW), which is provided on the address computation level (AR) of the pipeline unit (PLU) and is correspondingly designed, already in the phase before execution of these instructions by the execution unit (EXU),
- in that the determined advance results are stored in assignment to the respective instruction running through the individual processing stages up to execution, and
- in that the preprocessing of the respectively following instructions by the pipeline unit (PLU) is controlled on the basis of the results available in advance and buffer-stored.

2. Method according to Claim 1, characterized
- in that for each interpreted instruction the associated instruction length (IL) is stored in a separate memory (ILB) maintaining the assignment when this instruction is passed on from processing stage to processing stage,
- in that during the preprocessing of unconditional branch instructions, which effect a storage of the address of the linear follow-up instruction in a provided register of the general register set (PGRS), the follow-up instruction address is determined by the arithmetic unit (RW) of the pipeline unit (PLU) on the basis of the respective instruction counter reading, provided by the execution unit (EXU) and the sum ($\Sigma$IL) of the buffer-stored instruction lengths (IL) of the predecessor instructions, undergoing preprocessing, for the unconditional branch instruction to be preprocessed, and is stored until it is provided in the parameter buffer at the right time before execution of the unconditional branch instruction by the execution unit (EXU).

3. Method according to Claim 1 or 2, characterized
- in that it is checked in each instruction interpretation (IP) of an instruction whether it is an instruction changing the content of one of the registers of the general register set (PGRS) upon its execution on the execution level (AF) and fully executable within a working cycle (EOZ),
- in that, dependent on the positive result of this check, the respectively associated instruction is executed by the arithmetic unit (RW) in the phase before the execution level (AF) and the respectively determined result is entered in a multistage register conflict memory (RCB), the assignment of each entry being altered with the passing on of the associated instruction from processing stage to processing stage of the pipeline unit (PLU) until the associated instruction arrives in the execution unit (EXU) for execution and
- in that in the event of a register conflict triggered by one of the directly following follow-up instructions and valid entry in the register conflict memory (RCB), the further instruction pre-processing following the interpretation phase (IP) is continued directly on the basis of the existing entry, while in the case of an invalid entry the system usually waits until provision of the required valid register content by the execution unit (EXU).

4. Method according to Claim 3, characterized in that, for conflict monitoring, the fields of an instruction containing the register read addresses are in each case monitored in an instruction-related manner on the basis of the register write addresses of the predecessor instructions, entered in a conflict monitoring memory (RCC), and in that the monitoring results, assessed in an instruction-related manner, indicate a conflict if the content of the register entered in the conflict monitoring memory (RCC) has not in the meantime been altered by the execution unit (EXU) and the same register entry does not exist again as a more recent entry.

5. Method according to Claim 4, characterized in that, for conflict adjustment in the event of a plurality of conflict indications triggered simultaneously in accordance with the number of registers read simultaneously by an instruction, these conflict indications are converted into separate control signals for the switching over of the inputs of the arithmetic unit (RW) in the pipeline unit (PLU) from the respectively affected register of the general register set (PGRS) to the corresponding entry in the conflict memory (RCB).

6. Method according to Claim 5, characterized in that, in the case of data processing systems having two different addressing modes (24-bit and 31-bit addresses) and corresponding processing of 3-byte addresses or 4-byte addresses or operands, not only a validity bit (V) is used for each entry in the conflict monitoring memory (RCC), but also an additional control bit (3B), which indicates the validity of only 3 bytes of the associated entry in the conflict memory (RCB), and in that the enabling of the conflict adjustment for 4-byte affecting operands or addresses is controlled in a way dependent on this control bit (3B) and dependent on the respective addressing mode (A-BIT).

7. Method according to one of Claims 1 to 6, characterized
- in that, in the case of each instruction executed by the arithmetic unit (RW) of the pipeline unit (PLU) in the phase before execution by the execution unit (EXU), the associated indication (RW-ANZ) is determined and stored together with an indication alteration note and

- in that, in the case of a conditional branch instruction directly following an instruction already executed by the arithmetic unit (RW) of the pipeline unit (PLU), because of the stored indication alteration note, the conditional branch instruction is handled like an unconditional branch instruction and it is already checked in the interpretation phase (IP) of this instruction, on the basis of the indication of the predecessor instruction determined in advance, whether the branch condition is satisfied or not.

8. Method according to one of Claims 1 to 7, characterized in that the results respectively determined by the arithmetic unit (RW) of the pipeline unit (PLU) are compared after execution of the respectively associated instruction by the execution unit (EXU) with the results determined by the latter and in that, in the event of a determined mismatch, this system goes over into a corresponding interrupt routine.

9. Arrangement for reducing the number of lost cycles when processing instructions in data processing systems operating on the pipeline principle, having a pipeline unit (PLU) for instruction prefetch (LB), instruction interpretation (IP), address computation (AR) and parameter provision (BP), having an instruction execution unit (EXU) for the actual instruction execution (AF) and having a joint buffer and main memory, characterized
- by an arithmetic unit (RW), permitting in the phase before instruction execution by the execution unit (EXU) the provision of the decisions and/or results dependent on preset instructions, in the address computation stage (AR) of the pipeline unit (PLU),
- by devices (RCB, ZST) for storing the results supplied by the arithmetic unit (RW) in assignment to the respective instruction running through the individual processing stages up to execution and
- by devices for controlling the preprocessing of following instructions by the pipeline unit (PLU) on the basis of the stored results available in advance.

10. Arrangement according to Claim 9, characterized
- by a memory (ILB) for storing the instruction length (IL) of each interpreted instruction, maintaining the assignment when this instruction is passed on from processing stage to processing stage,
- by devices responding to interpreted unconditional branch instructions for feeding the arithmetic unit (RW) of the pipeline unit (PLU) with the sum ($\Sigma$IL) of the stored instruction length (IL) and the respective instantaneous instruction counter reading (PC), provided by the execution unit (EXU), and
- by devices for providing the instruction address, determined by the arithmetic unit (RW), at the right time for the linear follow-up instruction in the parameter buffer for the execution unit (EXU).

11. Arrangement according to Claim 9 or 10, characterized
- by a conflict monitoring device (RCC, VGST, H-LOG),
- by a register conflict memory (RCB) for buffer-storing the results supplied by the arithmetic unit (RW) of the pipeline unit (PLU) in assignment to the instructions undergoing preprocessing and
- by devices for selecting and providing the entry or entries required in the case of a conflict from the register conflict memory (RCB) for the arithmetic unit (RW).

12. Arrangement according to one of Claims 9 to 11, characterized by devices (ZST) for jointly controlling the assignment of the data and results respectively relating to the same instruction but stored in different memories (for example ILB, RCB, RCC) when the instruction is passed on from processing stage to processing stage.

**Revendications**

1. Procédé pour réduire le nombre des cycles perdus lors du traitement d'instructions dans des installations de traitement de données opérant selon le principe pipeline et comportant un processeur (PLU) de préparation d'instructions pour la lecture (LB) d'instructions, l'interprétation (IP) d'instructions, le calcul (AR) d'adresses et la préparation (BP) de paramètres, un processeur (EXU) d'exécution d'instructions pour l'exécution proprement dite (AF) d'instructions et une mémoire tampon/ mémoire de travail commune, caractérisé par le fait
- que des décisions et/ou des résultats, qui dépendent d'instructions fixées au préalable, déterminées pendant la phase d'interprétation (IP), sont établis pour la préparation d'instructions suivantes, par une unité de calcul (RW) prévue dans le plan (AR) de calcul d'adresses du processeur de préparation (PLU) et agencée de façon correspondante, et ce déjà par avance pour l'exécution de cette instruction par le processeur d'exécution (EXU),

- que les résultats antérieurs déterminés sont mémorisés en association avec l'instruction respective, qui suit les différentes étapes de traitement jusqu'à l'exécution, et

- que la préparation des instructions respectivement suivantes est commandée par le processeur de préparation (PLU) sur la base des résultats présents antérieurement et mémorisés temporairement.

2. Procédé suivant la revendication 1, caractérisé par le fait

- que pour chaque instruction interprétée, la longueur associée (IL) de l'instruction est mémorisée dans une mémoire particulière (ILB), tout en respectant l'association lors de la retransmission de cette instruction d'un étage de traitement au suivant,

- que, lors de la préparation d'instructions de saut conditionnel, qui déclenchent une mémorisation de l'adresse de l'instruction linéaire suivante dans un registre prévu de l'ensemble général de registres (PG RS), l'adresse de l'instruction suivante est déterminée et mémorisée par l'unité de calcul (RW) du processeur de préparation (PLU), sur la base de l'état respectif du compteur d'instructions, qui est délivré par le processeur d'exécution (EXU), et de la somme ($\Sigma$IL) des longueurs (IL), mémorisées temporairement, des instructions formant précurseurs, qui sont en préparation, pour l'instruction de saut inconditionnel, qui doit être préparée, et sont mémorisées, jusqu'à ce que ladite adresse soit délivrée en temps opportun avant l'exécution d'instructions de saut inconditionnel, par le processeur d'exécution (AXE), dans le tampon de paramètres.

3. Procédé suivant la revendication 1 ou 2, caractérisé par le fait

- que, lors de chaque interprétation (IP) d'une instruction, on vérifie s'il existe une instruction, qui modifie le contenu de l'un des registres de l'ensemble général de registres (PGRS), lors de son exécution dans le plan d'exécution (AF), et peut être exécuté complètement en l'espace d'un cycle de travail (EOZ),

- qu'en fonction du résultat positif de ce contrôle, l'instruction respectivement associée est exécutée par l'unité de calcul (RW) en avance par rapport au plan d'exécution (AF) et que le résultat respectivement déterminé est introduit dans une mémoire de conflits de registres (RCB) à plusieurs étages, l'association de chaque entrée à la retransmission de l'instruction associée étant modifiée d'un étage de traitement au suivant du processeur de préparation (PLU), jusqu'à ce que l'instruction associée soit exécutée dans le processeur d'exécution (EXU), et

- que dans le cas d'un conflit entre registres déclenché par l'une des instructions immédiatement suivantes et dans le cas d'une entrée valable dans la mémoire de conflits de registres (RCB), la poursuite de la préparation d'instructions, qui succède à la phase d'interprétation (IP), continue immédiatement sur la base de l'entrée précédente, tandis que, dans le cas d'une entrée non valable, le processeur d'exécution (EXU) attend habituellement jusqu'à la préparation du contenu valable nécessaire du registre.

4. Procédé suivant la revendication 3, caractérisé par le fait que pour le contrôle de conflits, les zones d'une instruction, qui contiennent les adresses de lecture des registres, sont contrôlées respectivement, en rapport avec l'instruction, sur la base des adresses d'enregistrement, introduites dans une mémoire de contrôle de conflits (RCC), des instructions formant précurseurs, et que les résultats de contrôle indiquent un conflit d'une manière évaluée par rapport à l'instruction, lorsque le contenu du registre introduit dans la mémoire de contrôle de conflit (RCC) n'a pas été modifié entre-temps par le processeur d'exécution (EXU) et que la même entrée de registre n'est pas présente à nouveau en tant qu'entrée plus récente.

5. Procédé suivant la revendication 4, caractérisé par le fait que pour la suppression des conflits, dans le cas de plusieurs indications de conflits déclenchés simultanément en fonction du nombre des registres lus simultanément par une instruction, ces indications sont converties en des signaux séparés de commande pour la commutation des entrées de l'unité de calcul (RW) dans le processeur de traitement (PLU) depuis le registre respectivement considéré de l'ensemble général de registres (PGRS) sur l'entrée correspondante dans la mémoire de conflits (RCB).

6. Procédé suivant la revendication 5, caractérisé par le fait que dans le cas d'installations de traitement de données comportant deux modes d'adressage différents (adresses à 24 bits et à 31 bits) et dans le cas d'un traitement correspondant d'adresses à trois octets ou d'adresses à quatre octets ou d'opérandes à

11

quatre octets, on utilise, en dehors d'un bit de validité (V) pour chaque entrée dans la mémoire de contrôle de conflit (RCC), un bit supplémentaire de commande (3B), qui indique la validité de seulement 3 octets de l'entrée associée dans la mémoire de conflit (RCB), et que la libération de la suppression des conflits pour des opérandes ou des adresses concernant 4 octets, est commandée en fonction de ce bit de commande (3B) et en fonction du mode d'adressage respectif (A-BIT).

7. Procédé suivant l'une des revendications 1 à 6, caractérisé par le fait
   - que pour chaque instruction exécutée par avance par l'unité de calcul (RW) du processeur de préparation (PLU) pour l'exécution par le processeur d'exécution (EXU), l'affichage associé (RW-ANZ) est déterminé et est mémorisé conjointement avec une indication de modification d'affichage, et
   - que dans le cas d'une instruction de saut conditionnel qui succède directement à une instruction déjà exécutée par l'unité de calcul (RW) du processeur de préparation (PLU), sur la base de l'indication mémorisée de changement d'affichage, l'instruction de saut conditionnel est traitée comme une instruction de saut inconditionnel, et déjà lors de la phase d'interprétation (IP) de cette instruction, un contrôle effectué sur la base de l'affichage, déterminé auparavant, de l'instruction formant précurseur, pour déterminer si la condition de saut est satisfaite ou non.

8. Procédé suivant l'une des revendications 1 à 7, caractérisé par le fait que les résultats respectivement déterminés par l'unité de calcul (RW) du processeur de préparation (PLU) sont comparés, après l'exécution de l'instruction respectivement associée, par le processeur d'exécution (EXU), au résultat déterminé par ce processeur et que dans le cas où une inégalité est établie, la procédure passe à un sous-programme d'interruption correspondant.

9. Dispositif pour réduire le nombre des cycles perdus lors du traitement d'instructions dans des installations de traitement de données travaillant selon le principe pipeline et comportant un processeur (PLU) de préparation d'instructions pour la lecture (LB) d'instructions, l'interprétation (IP) d'instructions, le calcul (AR) d'adresses et la préparation (BP) de paramètres, un processeur (EXU) d'exécution d'instructions pour l'exécution proprement dite (AF) d'instructions et une mémoire tampon/ mémoire de travail commune, caractérisé par
   - une unité de calcul (RW) qui permet avant l'exécution d'une instruction par le processeur d'exécution (EXU), la mise à disposition des décisions et/ou des résultats, qui dépendent d'instructions prédéterminées, et situés dans l'étage de calcul d'adresses (AR) du processeur de préparation (PLU),
   - des dispositifs (RCB, ZST) pour mémoriser les résultats délivrés par l'unité de calcul (RW), en association avec l'instruction respective qui passe par les différents échelons de traitement jusqu'à l'exécution, et
   - des dispositifs pour commander la préparation d'instructions suivantes par le processeur de préparation (PLU) sur la base des résultats mémorisés présents antérieurement.

10. Dispositif suivant la revendication 9, caractérisé par
    - une mémoire (ILB) pour mémoriser la longueur (IL) de chaque instruction interprétée, en respectant l'association lors de la retransmission de cette instruction d'un échelon de traitement au suivant,
    - des dispositifs qui répondent à des instructions interprétées de saut inconditionnel et servent à alimenter l'unité de calcul (RW) du processeur de préparation (PLU) avec la somme (ΣIL) de la longueur mémorisée d'instructions (IL) et avec l'état instantané respectif (PC) du compteur d'instructions, délivré par le processeur d'exécution (EXU), et
    - des dispositifs pour préparer en temps opportun l'adresse d'instructions, déterminée par l'unité de calcul (RW), pour l'instruction suivante dans le tampon de paramètres pour le processeur d'exécution (EXU).

11. Dispositif suivant la revendication 9 ou 10, caractérisé par
    - un dispositif de contrôle de conflits (RCC,VGST,H-LOG),
    - une mémoire de conflits de registres (RCB) pour mémoriser temporairement les résultats, délivrés par l'unité de calcul (RW) du processeur de préparation (PLU), en association avec les instructions en cours de préparation, et
    - des dispositifs pour sélectionner et préparer la ou les entrées requises, en cas de conflit, à partir de la mémoire de conflits de registres (RCB) pour l'unité de calcul (RW).

12. Dispositif suivant l'une des revendications 9 à 11, caractérisé par des dispositifs (ZST) pour commander conjointement l'association des données et résultats, qui concernent respectivement la même instruction, mais sont mémorisés dans différentes mémoires (par exemple ILB,RCB, RCC), lors de la retransmission de l'instruction d'un échelon de traitement au suivant.

FIG 1

FIG 2

EP 0 400 192 B1

# FIG 3

EP 0 400 192 B1

# FIG 4